# EUROPEAN PATENT APPLICATION

(11) **EP 4 495 849 A1**
(43) Date of publication of application: **22.01.2025**
(21) Application number: 22946659.4
(22) Date of filing: 26.12.2022
(51) Int. Cl.: G06Q 10/06, G06Q 30/06, G06Q 50/06, H02J 3/00, H02J 3/28

(54) **CONTROL METHOD AND APPARATUS OF ENERGY STORAGE SYSTEM, POWER SUPPLY SYSTEM AND ELECTRONIC DEVICE**

(30) Priority: 15.06.2022 CN 202210679448
(71) Applicant: Sungrow Power Supply (Nanjing) Co., Ltd, Nanjing, Jiangsu 210012 (CN)
(72) Inventor: ZHANG, Quan, Nanjing, Jiangsu 210012 (CN); ZHANG, Xinjie, Nanjing, Jiangsu 210012 (CN); XIA, Yanhui, Nanjing, Jiangsu 210012 (CN)
(74) Representative: Rooney, John-Paul
(86) International application number: PCT/CN2022/141962
(87) International publication number: WO 2023/240994

(57) **Abstract**

The present application provides a control method and apparatus of an energy storage system, a power supply system and an electronic device. The control method of an energy storage system comprises: obtaining a power scheduling demand and a user power utilization quotation of a user equipment, and energy storage information of an energy storage system in real time, wherein the energy storage information comprises a plurality of discharging pricings of different prices, and the user power utilization quotation is a discharging pricing selected by a user according to the power utilization urgency level of the user; determining a power scheduling demand of a target user equipment according to the power scheduling demands and the user power utilization quotations of all the user equipment; generating a target user scheduling instruction according to the power scheduling demand of the target user equipment and the energy storage information; and according to the target user scheduling instruction, controlling the energy storage system to provide electrical energy for the user equipment. According to the present solution, a power supply target can be selected according to the urgency level of the user equipment for the electrical energy demand, so that the economic value of the energy storage system is improved.

## Description

The present application claims the priority to Chinese Patent Application No. 202210679448.5, titled "CONTROL METHOD AND APPARATUS OF ENERGY STORAGE SYSTEM, POWER SUPPLY SYSTEM AND ELECTRONIC DEVICE", filed on June 15, 2022 with the China National Intellectual Property Administration, which is incorporated herein by reference in its entirety.

### FIELD

The present disclosure relates to the technical field of energy storage, and in particular to a method and an apparatus for controlling an energy storage system, a power supply system and an electronic device.

### BACKGROUND

With the rapid development of energy storage technology, an energy storage system is widely used in a power system. For example, the energy storage system is for power supply reliability assurance and power quality assurance, primary frequency regulation, secondary frequency regulation, peak shaving, moment of inertia, or voltage support.

In recent years, with the advancement of the dual-carbon plan, a penetration rate of a power generation system from renewable energy is gradually increasing in the power system. The energy storage system is required to reasonably dispatch electrical energy, in order to better maintain the stable operation of the power grid. However, in the existing dispatching method for the energy storage system, charge and discharge is performed directly in response to a dispatching instruction or based on a remaining capacity of the energy storage system, failing to achieve the maximum economic value of the energy storage system. In an unexpected and sudden electricity consumption scenario, the energy storage system lacks effective dispatching measure to supply power to user equipment in the scenario.

### SUMMARY

A method and an apparatus for controlling an energy storage system, a power supply system and an electronic device are provided according to the present disclosure, to enhance the flexibility of supply power from the energy storage system to the user equipment, thereby improving the economic value of the energy storage system.

In a first aspect, a method for controlling an energy storage system is provided according to an embodiment of the present disclosure. The method includes: acquiring a power dispatching demand of user equipment, a user quotation for electricity consumption, and energy storage information of the energy storage system in a real time manner, where the energy storage information includes multiple discharge prices at different price levels, and the user quotation for electricity consumption is a discharge price selected from the multiple discharge prices by a user based on a demand urgency for electricity consumption of the user; determining a power dispatching demand of target user equipment based on the power dispatching demands and the user quotations for electricity consumption of all the user equipment; generating a target user dispatching instruction based on the power dispatching demand of the target user equipment and the energy storage information; and controlling the energy storage system to supply power to the user equipment in response to the target user dispatching instruction.

In an embodiment, the determining a power dispatching demand of target user equipment includes: determining a target price based on all the user quotations for electricity consumption; determining the power dispatching demand of each user equipment corresponding to the target price; determining an acquisition time of the power dispatching demand of the each user equipment corresponding to the target price; and determining the power dispatching demand of the target user equipment based on an order of the acquisition time of the power dispatching demand of the each user equipment corresponding to the target price.

In an embodiment, the determining a target price includes sorting all the user quotations for electricity consumption in a descending order; and determining the user quotations for electricity consumption sequentially as the target price based on the sorting of the user quotations for electricity consumption.

In an embodiment, the determining a power dispatching demand of target user equipment includes determining, based on the order of the acquisition time of the power dispatching demand of the each user equipment corresponding to the target price, the power dispatching demand of the each user equipment sequentially as the power dispatching demand of the target user equipment.

In an embodiment, the generating a target user dispatching instruction includes determining whether the energy storage system meets the power dispatching demand of the target user equipment based on the energy storage information; generating the target user dispatching instruction based on the power dispatching demand of the target user equipment, in a case that the energy storage system meets the power dispatching demand of the target user equipment; and determining a power supply capacity of the energy storage system based on the energy storage information and generating the user dispatching instruction based on the power supply capacity, in a case that the energy storage system fails to meet the power dispatching demand of the target user equipment.

In an embodiment, the power dispatching demand of the user equipment includes a charge power range, a discharge power range, an electricity demand and a power generation capacity; the energy storage information further includes an available discharge power range, an available charge power range, an available discharge capacity, an available charge capacity and a charge price; and the multiple discharge prices correspond to different available discharge power ranges and different available discharge capacities of the energy storage system.

In an embodiment, after the controlling the energy storage system to supply power to the user equipment in response to the target user dispatching instruction, the method further includes updating bill information in response to the target user dispatching instruction; and updating the energy storage information.

In a second aspect, an apparatus for controlling an energy storage system is provided according to an embodiment of the present disclosure, and the apparatus includes:
an acquisition module, configured to acquire a power dispatching demand of user equipment, a user quotation for electricity consumption, and energy storage information of the energy storage system in a real time manner, where the energy storage information includes multiple discharge prices at different price levels, and the user quotation for electricity consumption is a discharge price selected from the multiple discharge prices by a user based on a demand urgency for electricity consumption of the user;
a power dispatching demand determination module of target user equipment, configured to determine a power dispatching demand of the target user equipment based on the power dispatching demands and the user quotations for electricity consumption of all the user equipment;
a generation module for a target user dispatching instruction, configured to generate a target user dispatching instruction based on the power dispatching demand of the target user equipment and the energy storage information; and
a dispatching module, configured to control the energy storage system to supply power to the user equipment in response to the target user dispatching instruction.

In a third aspect, a power supply system is provided according to an embodiment of the present disclosure, including at least one user equipment, an alternating-current power grid, at least one energy storage system and an apparatus for controlling an energy storage system. The apparatus for controlling an energy storage system is configured to perform the method for controlling an energy storage system according to any one of the embodiments described above.

In a fourth aspect, an electronic device is further provided according to an embodiment of the present disclosure. The electronic device includes at least one processor; a communication interface connected to the at least one processor; and a memory connected to the at least one processor and the communication interface, where the memory is configured to store a computer program executable by the at least one processor, and the computer program is executed by the at least one processor to cause the at least one processor to perform the method for controlling an energy storage system according to any one of the embodiments described above.

In the embodiments of the present disclosure, the power dispatching demand of user equipment, the user quotation for electricity consumption, and the energy storage information of the energy storage system are acquired in a real time manner, preparing for the subsequent control on power supply of the energy storage system. The power dispatching demand of target user equipment is determined based on the power dispatching demands and the user quotations for electricity consumption of all the user equipment, and the power dispatching demand of the target user equipment with the highest demand urgency for electricity consumption is determined, so that power can be purposefully supplied, enhancing the flexibility of supply power from the energy storage system to the user equipment, thereby improving the economic value of the energy storage system. The target user dispatching instruction is generated based on the power dispatching demand of the target user equipment and the energy storage information, so that the energy storage system can meet the power dispatching demand of the target user equipment as much as possible within its capability, ensuring the normal operation of the energy storage system while not affecting other ongoing power supply tasks of the energy storage system. The energy storage system is controlled to supply power to user equipment in response to the target user dispatching instruction, so that the energy storage system can be controlled to accurately supply power to the user equipment. In summary, compared with the conventional technology, according to the solutions of the present disclosure, a power supply object is determined based on the demand urgency for electrical energy of the user equipment, thereby improving the economic value of the energy storage system.

### BRIEF DESCRIPTION OF THE DRAWINGS

In order to clearly illustrate the technical solutions in the embodiments of the present disclosure, drawings to be used in the description of the embodiments of the present disclosure are briefly described hereinafter. It is apparent that the drawings in the following description show only some embodiments of the present disclosure. Those skilled in the art can obtain other drawings based on these drawings without any creative efforts.
FIG. 1 is a schematic flowchart of a method for controlling an energy storage system according to an embodiment of the present disclosure;
FIG. 2 is a schematic flowchart of a method for determining a power dispatching demand of target user equipment according to an embodiment of the present disclosure;
FIG. 3 is a schematic flowchart of a method for determining a power dispatching demand of target user equipment according to another embodiment of the present disclosure;
FIG. 4 is a schematic flowchart of a method for generating a target user dispatching instruction according to an embodiment of the present disclosure;
FIG. 5 is a schematic flowchart of a method for controlling an energy storage system according to another embodiment of the present disclosure;
FIG. 6 is a schematic structural diagram of an apparatus for controlling an energy storage system according to an embodiment of the present disclosure;
FIG. 7 is a schematic structural diagram of a power supply system according to an embodiment of the present disclosure; and
FIG. 8 is a schematic structural diagram of an electronic device according to an embodiment of the present disclosure.

### DETAILED DESCRIPTION

In order to enable those skilled in the art to better understand the solutions according to the present disclosure, the technical solutions in the embodiments of the present disclosure are described clearly and completely hereinafter with reference to the drawings in the embodiments of the present disclosure. It is apparent that the embodiments described are only some rather than all the embodiments of the present disclosure. Based on the embodiments in the present disclosure, any other embodiments obtained by those skilled in the art without any creative efforts fall within the protection scope of the present disclosure.

It should be noted that the terms such as "target" in the specification, claims, and drawings of the present disclosure are intended to distinguish similar objects rather than describe a particular sequence or order. It should be understood that these terms may be exchanged in appropriate cases, such that the embodiments of the present disclosure can be implemented in an order different from the order shown or described herein. Moreover, the terms "include (comprise)" and any other variants thereof are intended to cover a non-exclusive inclusion. For example, a process, method, system, product, or device that includes a list of steps or units is not necessarily limited to the expressly listed steps or units, but may include other steps or units not expressly listed or inherent to the process, method, product, or device.

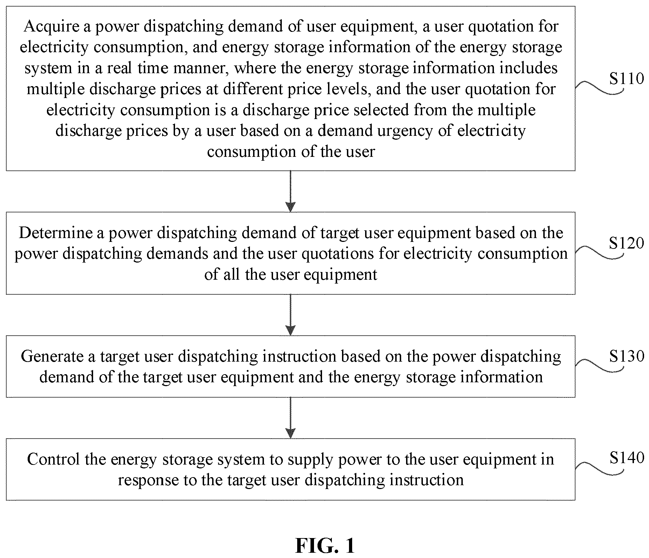

FIG. 1 is a schematic flowchart of a method for controlling an energy storage system according to an embodiment of the present disclosure. This embodiment may be applied in power dispatching of the energy storage system. This method may be performed by an apparatus for controlling an energy storage system. The apparatus may be implemented in hardware and/or software. The method includes the following steps S110 to S140.

In step S110, a power dispatching demand of user equipment, a user quotation for electricity consumption, and energy storage information of the energy storage system are acquired in a real time manner, where the energy storage information includes multiple discharge prices at different price levels, and the user quotation for electricity consumption is a discharge price selected from the multiple discharge prices by the user based on a demand urgency for electricity consumption.

The user equipment includes a power-consuming electrical appliance and a power generation apparatus of a user. The power dispatching demand of user equipment includes an electricity demand required by the user equipment supplied by the energy storage system and an electricity situation outputted by the user equipment. The energy storage information of the energy storage system mainly records a current electricity storage status of the energy storage system. The energy storage information is continually updated as the energy storage system charges and discharges. The energy storage information includes multiple discharge prices, and the multiple discharge prices correspond to different energy storage statuses of the energy storage system. For example, a discharge price A1 corresponds to 100%-70% of electricity storage of the energy storage system, a discharge price A2 corresponds to 70%-40% of the electricity storage of the energy storage system, and a discharge price A3 corresponds to 40%-20% of the electricity storage of the energy storage system.

In addition, the user may select any discharge price from the energy storage information as the user quotation for electricity consumption based on own demand urgency for electrical energy. The criterion for the user to select the discharge price as the user quotation for electricity consumption based on own demand urgency for electricity consumption is as follow. A high demand urgency for electricity consumption of the user indicates that the user selects a high discharge price as the user quotation for electricity consumption. As a result, the energy storage system may learn the demand urgency for electricity consumption of the user based on the user quotation for electricity consumption, so that the user with a high demand urgency can be preferentially powered. For example, if the discharge price A1 is lower than the discharge price A2 and the discharge price A2 is lower than the discharge price A3, the user selects the highest discharge price A3 as the user quotation for electricity consumption in a case that the demand urgency for electricity consumption of the user is high, so that the energy storage system can preferentially supply power to user equipment with a high demand urgency. In a case that the demand urgency for electricity consumption of the user is moderate, the moderate discharge price A2 may be selected as the user quotation for electricity consumption, so that the energy storage system can supply power to the user equipment with the moderate demand urgency after supplying power to the user equipment with the high demand urgency. In a case that the demand urgency for electricity consumption of the user is low, the lowest discharge price A1 may be selected as the user quotation for electricity consumption, so that the energy storage system can supply power to the user equipment with the low demand urgency after supplying power to the user equipment with the moderate demand urgency.

In an embodiment, the power dispatching demand of user equipment includes a charge power range, a discharge power range, an electricity demand and a power generation capacity. The energy storage information further includes an available discharge power range, an available charge power range, an available discharge capacity, an available charge capacity and a charge price. The multiple discharge prices correspond to different available discharge power ranges and different available discharge capacities of the energy storage system.

It should be noted that the larger discharge power range and the larger available discharge capacity of the energy storage system generally indicates a lower discharge price, and the smaller discharge power range and the smaller available discharge capacity of the energy storage system generally indicates a higher discharge price. The charge price is determined based on the discharge capacity of all the user equipment and the available charge capacity of the energy storage system. For example, the larger discharge capacity of all the user equipment and the smaller available charge capacity of the energy storage system indicates a lower charge price, and the smaller discharge capacity of all the user equipment and the larger available charge capacity of the energy storage system indicates a higher charge price.

In summary, the power dispatching demand of user equipment, the user quotation for electricity consumption, and energy storage information of the energy storage system are acquired in a real time manner, preparing for the subsequent control on the energy storage system, so that the energy storage system can flexibly supply power to the user equipment, thereby improving economic value of the energy storage system.

In step S120, a power dispatching demand of target user equipment is determined based on the power dispatching demands and the user quotations for electricity consumption of all the user equipment.

Where, the power dispatching demand of the target user equipment is a power demand of user equipment with highest demand urgency for electricity consumption among all the user equipment. The energy storage system learns the demand urgency for electricity consumption of each user based on the user quotation for electricity consumption, and determines, based on the user quotation for electricity consumption, the power dispatching demand of user equipment with the highest demand urgency for electricity consumption as the power dispatching demand of the target user equipment, thereby facilitating preferential power supply for the target user equipment. As a result, the power dispatching demand of the target user equipment with the highest demand urgency for electricity consumption is determined, and power can be purposefully supplied, enhancing the flexibility of supply power from the energy storage system to the user equipment, thereby improving the economic value of the energy storage system.

In step S130, a target user dispatching instruction is generated based on the power dispatching demand of the target user equipment and the energy storage information.

After the power dispatching demand of the target user equipment is determined, whether the energy storage system meets the power dispatching demand of the target user equipment is determined based on the energy storage information. In a case that the energy storage system fails to meet the power dispatching demand of the target user equipment, the target user dispatching instruction is generated based on a power supply capacity of the energy storage system. In a case that the energy storage system meets the power dispatching demand of the target user equipment, the target user dispatching instruction is generated based on the power dispatching demand of the target user equipment.

For example, if the available discharge power range of the energy storage system is greater than or equal to the charge power range of the target user equipment, and the available discharge capacity of the energy storage system is greater than or equal to the electricity demand of the target user equipment, it indicates that the energy storage system can meet the power dispatching demand of the target user equipment. In such case, the target user dispatching instruction is generated based on the power dispatching demand of the target user equipment. If the available discharge power range of the energy storage system is less than the charge power range of the target user equipment, and the available discharge capacity of the energy storage system is less than the electricity demand of the target user equipment, it indicates that the energy storage system fails to meet the power dispatching demand of the target user equipment. In such case, the target user dispatching instruction is generated based on the power supply capacity of the energy storage system.

In summary, it is determined whether the energy storage system meets the power dispatching demand of the target user equipment based on the energy storage information, so that the energy storage system can meet the power dispatching demand of the target user equipment as much as possible within its capability, thus ensuring the normal operation of the energy storage system while not affecting other ongoing power supply tasks of the energy storage system.

In step S140, the energy storage system is controlled to supply power to the user equipment in response to the target user dispatching instruction.

In an embodiment, the target user dispatching instruction includes a power range to be discharged from the energy storage system, a discharge electric quantity, and user equipment to be powered. In this way, the energy storage system can be controlled to accurately supply power to the user equipment in response to the target user dispatching instruction.

In the embodiment of the present disclosure, the power dispatching demand of user equipment, the user quotation for electricity consumption, and the energy storage information of the energy storage system are acquired in a real time manner, preparing for the subsequent control on power supply of the energy storage system. The power dispatching demand of the target user equipment is determined based on the power dispatching demands and the user quotations for electricity consumption of all the user equipment, and the power dispatching demand of the target user equipment with the highest demand urgency for electricity consumption is determined, so that power can be purposefully supplied, enhancing the flexibility of supply power from the energy storage system to the user equipment, thereby improving the economic value of the energy storage system. The target user dispatching instruction is generated based on the power dispatching demand of the target user equipment and the energy storage information, so that the energy storage system can meet the power dispatching demand of the target user equipment as much as possible within its capability, ensuring the normal operation of the energy storage system while not affecting other ongoing power supply tasks of the energy storage system. The energy storage system is controlled to supply power to user equipment in response to the target user dispatching instruction, so that the energy storage system can be controlled to accurately supply power to the user equipment. In summary, compared with the conventional technology, according to the solutions of the present disclosure, a power supply object is determined based on the demand urgency for electrical energy of the user equipment, thereby improving the economic value of the energy storage system.

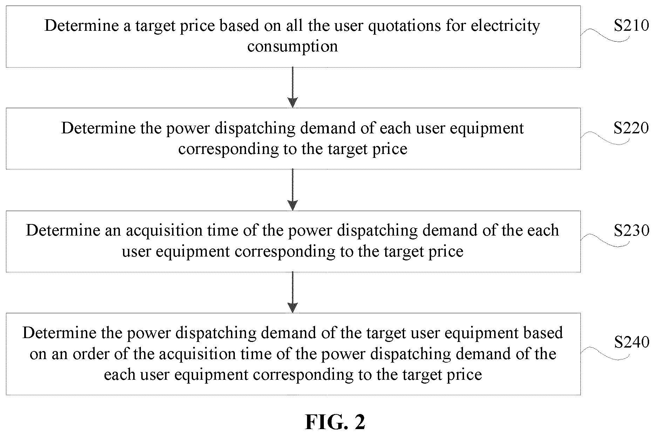

Exemplarily, FIG. 2 is a schematic flowchart of a method for determining a power dispatching demand of target user equipment according to an embodiment of the present disclosure. Based on the above embodiment, the method for determining the power dispatching demand of the target user equipment is further described in detail by the following steps S210 to S240.

In step S210, a target price is determined based on all the user quotations for electricity consumption.

Where, the target price refers to the user quotation for electricity consumption with the highest price among the user quotations for electricity consumption of all the user equipment. Since the user quotation for electricity consumption is the discharge price of the energy storage system selected by a user based on the demand urgency for electricity consumption of the user, and the energy storage system preferentially supplies power to user equipment with the highest demand urgency for electricity consumption, the target price is to be determined.

In step S220, the power dispatching demand of each user equipment corresponding to the target price is determined.

If the user quotations for electricity consumption of multiple users are the target price with the highest price, the power dispatching demands of each user equipment corresponding to the target price are determined. That is, the power dispatching demands of the user equipment with the same highest demand urgency for electricity consumption are determined, so that the power storage system preferentially supplies power to all the user equipment corresponding to the target price based on the power dispatching demands of the user equipment corresponding to the target price, enhancing the flexibility of supply power from the energy storage system to the user equipment, thereby improving the economic value of the energy storage system.

In step S230, an acquisition time of the power dispatching demands of each user equipment corresponding to the target price is determined.

The acquisition time of the power dispatching demand of each user equipment corresponding to the target price is determined, in order to further clarify an order of power supply for the user equipment corresponding to the target price, so as to power the user equipment corresponding to the target price based on the order of the acquisition time of the power dispatching demand of each user equipment corresponding to the target price.

In step S240, the power dispatching demand of the target user equipment is determined based on an order of the acquisition time of the power dispatching demand of each user equipment corresponding to the target price.

The power dispatching demand of each user equipment corresponding to the target price is sorted based on the order of the acquisition time of the power dispatching demand of each user equipment corresponding to the target price, and the power dispatching demand of the user equipment corresponding to the target price acquired first is determined as the power dispatching demand of the target user equipment.

In summary, with the above method, the power dispatching demands of user equipment with the same demand urgency may be sorted, and the power dispatching demand of the user equipment corresponding to the target price acquired first may be responded preferentially, so that the power can be supplied on a first-come, first-served basis, enhancing the flexibility of supply power from the energy storage system to the user equipment, thereby improving the economic value of the energy storage system.

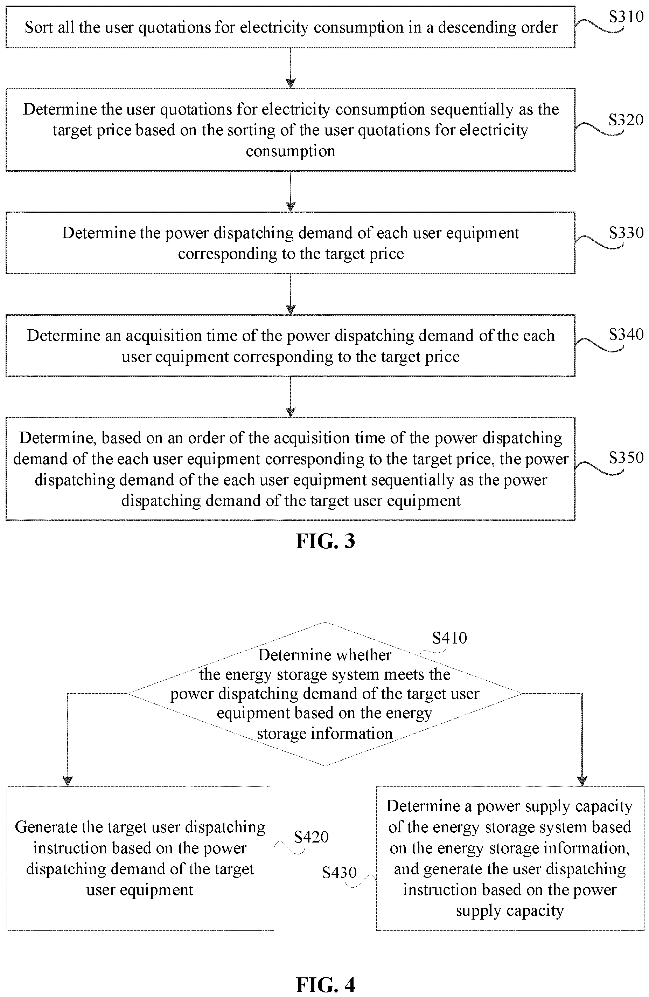

Exemplarily, FIG. 3 is a schematic flowchart of a method for determining a power dispatching demand of target user equipment according to another embodiment of the present disclosure. Based on the above embodiment, the method for determining the power dispatching demand of the target user equipment is further described in detail by the following steps S310 to S350.

In step S310, all the user quotations for electricity consumption are sorted in a descending order.

In step S320, the user quotations for electricity consumption are sequentially determined as the target price based on the sorting of the user quotations for electricity consumption.

In step S330, the power dispatching demand of each user equipment corresponding to the target price is determined.

In step S340, an acquisition time of the power dispatching demand of the each user equipment corresponding to the target price is determined.

In step S350, the power dispatching demand of the each user equipment is sequentially determined as the power dispatching demand of the target user equipment, based on an order of the acquisition time of the power dispatching demand of the each user equipment corresponding to the target price.

For example, if the user quotations for electricity consumption of five user equipment are acquired, available discharge prices for the user quotations for electricity consumption includes a discharge price A1, a discharge price A2, a discharge price A3 and a discharge price A4, and the discharge price A1<the discharge price A2<the discharge price A3<the discharge price A4. Where, the user quotation for electricity consumption of user equipment 1 is the discharge price A1, the user quotation for electricity consumption of user equipment 2 is the discharge price A2, the user quotation for electricity consumption of user equipment 3 is the discharge price A3, and the user quotation for electricity consumption of user equipment 4 is the discharge price A3 and the user quotation for electricity consumption of user equipment 5 is the discharge price A2.
1) All the user quotations for electricity consumption are sorted in the descending order, to obtain as the discharge price A3>the discharge price A2>the discharge price A1.
2) The user quotations for electricity consumption are determined sequentially as the target price based on the sorting of the user quotations for electricity consumption. Based on the above sorting results, the discharge price A3 among the user quotations for electricity consumption is first determined as the target price. After the user equipment corresponding to the target price of the discharge price A3 is powered, the discharge price A2 among the user quotations for electricity consumption is determined as the target price. After the user equipment corresponding to the target price of the discharge price A2 is powered, the discharge price A1 among the user quotations for electricity consumption is determined as the target price.
3) The power dispatching demand of each user equipment corresponding to the target price is determined. If the target price is the discharge price A3, the power dispatching demands of the user equipment 3 and the user equipment 4 are determined.
4) The acquisition time of the power dispatching demand of each user equipment corresponding to the target price is determined. Where, the acquisition time of the power dispatching demand of the user equipment 3 is earlier than the acquisition time of the power dispatching demand of the user equipment 4.
5) The power dispatching demand of the each user equipment is sequentially determined as the power dispatching demand of the target user equipment, based on the order of the acquisition time of the power dispatching demand of each user equipment corresponding to the target price. Where, the power dispatching demand of the user equipment 3 is first determined as the power dispatching demand of the target user equipment. After the user equipment 3 is powered, the power dispatching demand of the user equipment 4 is determined as the power dispatching demand of the target user equipment.

In summary, with the above method, the power dispatching demands of user equipment with the same demand urgency may be sorted, and the power dispatching demand of the user equipment corresponding to the target price acquired first may be responded preferentially, so that the power can be supplied on a first-come, first-served basis, enhancing the flexibility of supply power from the energy storage system to the user equipment, thereby improving the economic value of the energy storage system.

Exemplarily, FIG. 4 is a schematic flowchart of a method for generating a target user dispatching instruction according to an embodiment of the present disclosure. Based on the above embodiment, the method for generating a target user dispatching instruction is further described in detail by the following steps S410 to S430.

In step S410, it is determined whether the energy storage system meets the power dispatching demand of the target user equipment based on the energy storage information. In a case that the energy storage system meets the power dispatching demand of the target user equipment, step S420 is performed; and in a case that the energy storage system fails to meet the power dispatching demand of the target user equipment, step S430 is performed.

It is determined whether the energy storage system meets the power dispatching demand of the target user equipment based on the energy storage information, so that the energy storage system can meet the power dispatching demand of the target user equipment as much as possible within its capability, thus ensuring the normal operation of the energy storage system while not affecting other ongoing power supply tasks of the energy storage system.

In step S420, the target user dispatching instruction is generated based on the power dispatching demand of the target user equipment.

For example, if the available discharge power range of the energy storage system is greater than or equal to the charge power range of the target user equipment, and the available discharge capacity of the energy storage system is greater than or equal to the electricity demand of the target user equipment, it indicates that the energy storage system can meet the power dispatching demand of the target user equipment. In such case, the target user dispatching instruction is generated based on the power dispatching demand of the target user equipment.

In step S430, a power supply capacity of the energy storage system is determined based on the energy storage information, and the user dispatching instruction is generated based on the power supply capacity.

For example, if the available discharge power range of the energy storage system is less than the charge power range of the target user equipment, or the available discharge capacity of the energy storage system is less than the electricity demand of the target user equipment, it indicates that the energy storage system fails to meet the power dispatching demand of the target user equipment. In such case, the target user dispatching instruction is generated based on the power supply capacity of the energy storage system.

In summary, the user dispatching instruction is generated with the above method, ensuring the normal operation of the energy storage system while not affecting other ongoing power supply tasks of the energy storage system.

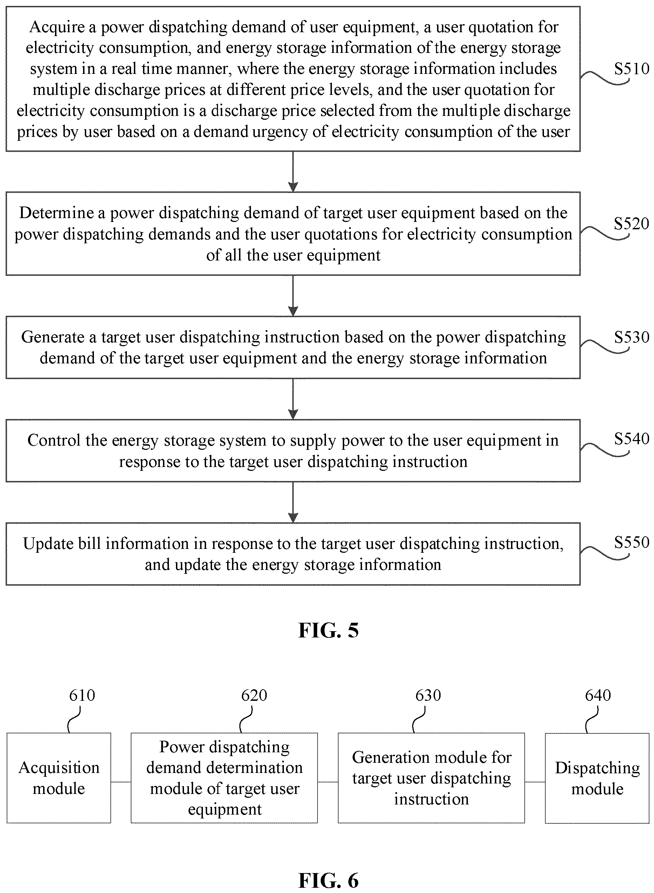

Exemplarily, FIG. 5 is a schematic flowchart of a method for controlling an energy storage system according to another embodiment of the present disclosure. As shown in FIG. 5, the method includes the following steps S510 to S550.

In step S510, a power dispatching demand of user equipment, a user quotation for electricity consumption, and energy storage information of the energy storage system are acquired in a real time manner, where the energy storage information includes multiple discharge prices at different price levels, and the user quotation for electricity consumption is a discharge price selected from the multiple discharge prices by a user based on a demand urgency for electricity consumption of the user.

In step S520, a power dispatching demand of target user equipment is determined based on the power dispatching demands and the user quotations for electricity consumption of all the user equipment.

In step S530, a target user dispatching instruction is generated based on the power dispatching demand of the target user equipment and the energy storage information.

In step S540, the energy storage system is controlled to supply power to the user equipment in response to the target user dispatching instruction.

In step S550, bill information is updated in response to the target user dispatching instruction, and the energy storage information is updated.

Where, the bill information includes whether a transaction is completed, a transacted price and a transacted electricity quantity. The bill information stores historical records, so that user equipment can read and view the records. The energy storage information of the energy storage system mainly records a current electricity storage status of the energy storage system. The energy storage information is continually updated as the energy storage system charges and discharges to ensure the accuracy and stability of recording the electricity storage status of the energy storage system.

In an embodiment, based on the above embodiment, the energy storage information of the energy storage system is further described in detail. The process of updating the energy storage information of the energy storage system includes updating the available charge and discharge power ranges of the energy storage system; updating the available charge and discharge capacities of the energy storage system; modifying each discharge price based on the available charge and discharge power ranges and the available charge and discharge capacities; or modifying the discharge price based on the historical power dispatching demands of all the user equipment; and generating a discharge price list based on the modified discharge prices.

FIG. 6 is a schematic structural diagram of an apparatus for controlling an energy storage system according to an embodiment of the present disclosure. As shown in FIG. 6, the apparatus for controlling an energy storage system includes an acquisition module 610, a power dispatching demand determination module of target user equipment 620, a generation module for a target user dispatching instruction 630 and a dispatching module 640.

The acquisition module 610 is configured to acquire a power dispatching demand of user equipment, a user quotation for electricity consumption, and energy storage information of the energy storage system in a real time manner, where the energy storage information includes multiple discharge prices at different price levels, and the user quotation for electricity consumption is a discharge price selected from the multiple discharge prices by a user based on a demand urgency for electricity consumption of the user.

The power dispatching demand determination module of target user equipment 620 is configured to determine a power dispatching demand of the target user equipment based on the power dispatching demands and the user quotations for electricity consumption of all the user equipment.

The generation module for a target user dispatching instruction 630 is configured to generate a target user dispatching instruction based on the power dispatching demand of the target user equipment and the energy storage information.

The dispatching module 640 is configured to control the energy storage system to supply power to the user equipment in response to the target user dispatching instruction.

In the embodiment of the present disclosure, the acquisition module 610 acquires the power dispatching demand of user equipment, the user quotation for electricity consumption, and the energy storage information of the energy storage system in a real time manner, preparing for the subsequent control on power supply of the energy storage system. The power dispatching demand determination module of target user equipment 620 determines the power dispatching demand of target user equipment based on the power dispatching demands and the user quotations for electricity consumption of all the user equipment, and the power dispatching demand of the target user equipment with the highest demand urgency for electricity consumption is determined, so that power can be purposefully supplied, enhancing the flexibility of supply power from the energy storage system to the user equipment, thereby improving the economic value of the energy storage system. The generation module for a target user dispatching instruction 630 generates the target user dispatching instruction based on the power dispatching demand of the target user equipment and the energy storage information, so that the energy storage system can meet the power dispatching demand of the target user equipment as much as possible within its capability, ensuring the normal operation of the energy storage system while not affecting other ongoing power supply tasks of the energy storage system. The dispatching module 640 controls the energy storage system to supply power to user equipment in response to the target user dispatching instruction, so that the energy storage system can be controlled to accurately supply power to the user equipment. In summary, compared with the conventional technology, according to the solutions of the present disclosure, a power supply object is determined based on the demand urgency for the electrical energy of the user equipment, thereby improving the economic value of the energy storage system.

In an embodiment, the power dispatching demand determination module of target user equipment includes a target price determination unit, a selection unit, a time determination unit, and a power dispatching demand determination unit of the target user equipment.

The target price determination unit is configured to determine a target price based on all the user quotations for electricity consumption.

The selection unit is configured to determine the power dispatching demand of each user equipment corresponding to the target price.

The time determination unit is configured to determine an acquisition time of the power dispatching demand of the each user equipment corresponding to the target price.

The power dispatching demand determination unit of the target user equipment is configured to determine the power dispatching demand of the target user equipment based on an order of the acquisition time of the power dispatching demand of the each user equipment corresponding to the target price.

In an embodiment, the target price determination unit is further configured to sort all the user quotations for electricity consumption in a descending order; and determine the user quotations for electricity consumption sequentially as the target price based on the sorting of the user quotations for electricity consumption.

In an embodiment, the power dispatching demand determination unit of the target user equipment is further configured to determine, based on the order of the acquisition time of the power dispatching demand of the each user equipment corresponding to the target price, the power dispatching demand of the each user equipment sequentially as the power dispatching demand of the target user equipment.

In an embodiment, the generation module for a target user dispatching instruction is further configured to determine whether the energy storage system meets the power dispatching demand of the target user equipment based on the energy storage information; generate the target user dispatching instruction based on the power dispatching demand of the target user equipment, in a case that the energy storage system meets the power dispatching demand of the target user equipment; and determine a power supply capacity of the energy storage system based on the energy storage information and generate the user dispatching instruction based on the power supply capacity, in a case that the energy storage system fails to meet the power dispatching demand of the target user equipment.

In an embodiment, the power dispatching demand of the user equipment includes a charge power range, a discharge power range, an electricity demand and a power generation capacity. The energy storage information further includes an available discharge power range, an available charge power range, an available discharge capacity, an available charge capacity and a charge price. The multiple discharge prices correspond to different available discharge power ranges and different available discharge capacities of the energy storage system.

In an embodiment, the apparatus for controlling an energy storage system further includes an updating module.

The updating module is configured to update bill information in response to the target user dispatching instruction; and update the energy storage information.

The apparatus for controlling an energy storage system according to the embodiment of the present disclosure may perform the method for controlling an energy storage system according to any one of the embodiments of the present disclosure, and has functional modules and beneficial effects corresponding to the method.

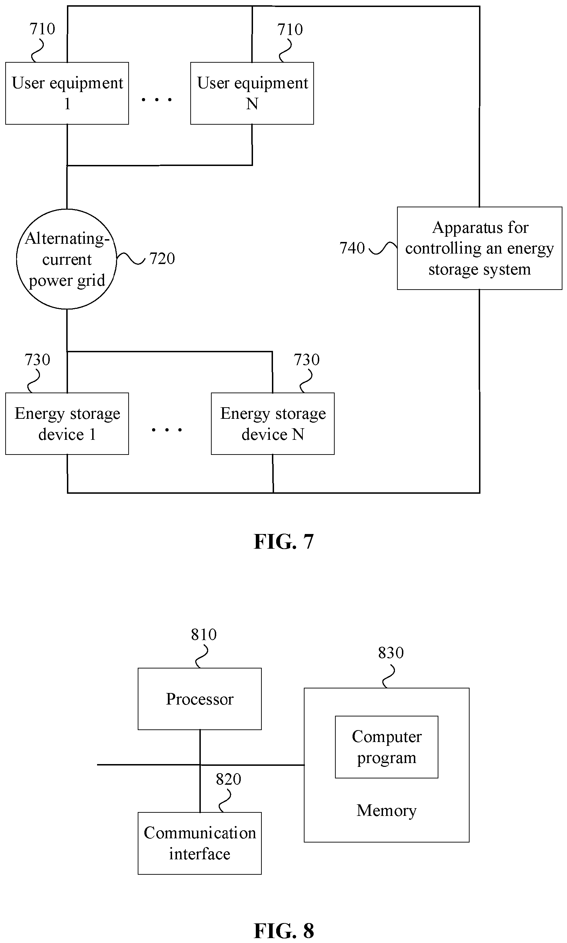

FIG. 7 is a schematic structural diagram of a power supply system according to an embodiment of the present disclosure. The power supply system includes at least one user equipment 710, an alternation-current power grid 720, at least one energy storage system 730, and an apparatus for controlling an energy storage system 740. The apparatus for controlling an energy storage system 740 is configured to perform the method for controlling an energy storage system according to any one of the embodiments of the present disclosure.

The user equipment 710 is connected to the energy storage system 730 through the alternating-current power grid 720, so that the user equipment 710 can perform electrical energy interaction with the energy storage system 730 through the alternating-current power grid 720. Both the user equipment 710 and the energy storage system 730 are connected to the apparatus for controlling an energy storage system 740, so that the apparatus for controlling an energy storage system 740 can acquire the power dispatching demand of the user equipment 710, the user quotation for electricity consumption, and the energy storage information of the energy storage system 730, and perform charge and discharge dispatching on the energy storage system 730.

The power supply system includes the apparatus for controlling an energy storage system 740 according to any one of the embodiments of the present disclosure. The apparatus for controlling an energy storage system 740 is configured to perform the method for controlling an energy storage system according to any one of the above embodiments. Therefore, the power supply system has the beneficial effects of the method for controlling an energy storage system according to the embodiment of the present disclosure, which are not repeated here.

FIG. 8 is a schematic structural diagram of an electronic device according to an embodiment of the present disclosure. The electronic device includes at least one processor 810, a communication interface 820 connected to the at least one processor 810, and a memory 830 connected to the at least one processor 810 and the communication interface 820. The memory 830 stores a computer program executable by the at least one processor 810, and the computer program is executed by the at least one processor 810 to cause the at least one processor 810 to perform the method for controlling an energy storage system according to any one of the above embodiments.

The processor 810, the memory 830 and the communication interface 820 are connected to each other through a data bus. The memory 830 stores a computer program executable by the at least one processor 810. The processor 810 may perform various appropriate actions and processes based on the computer program stored in the memory 830. The communication interface 820 is a window for the processor 810 and the memory 830 to interact with external apparatuses or external devices. The processor 810 may receive or send instructions through the communication interface 820, and the memory 830 may store data sent by external apparatuses or external devices through the communication interface 820 based on the instructions sent by the processor 810.

The processor 810 may be various general-purpose and/or special-purpose processing components with processing and computing capabilities. Some examples of the processor 810 include, but are not limited to, a central processing unit, a graphics processing unit, various specialized artificial intelligence computing chips, various processors running machine learning model algorithms, a digital signal processor, and any suitable processor, controller, microcontroller, or the like. The processor is configured to perform the method for controlling an energy storage system according to any one of the above embodiments.

It should be understood that steps may be reordered, added or deleted using the various forms of processes shown above. For example, the steps described in the present disclosure may be executed in parallel, sequentially or in a different order, so long as the desired result of the technical solution of the present disclosure can be achieved, which is not limited herein.

The above specific embodiments are not intended to limit the protection scope of the present disclosure. It should be understood by those skilled in the art that various modifications, combinations, sub combinations and substitutions may be made based on design requirements and other factors. Any modification, equivalent substitution and improvement made within the spirit and principle of the present disclosure should be included in the protection scope of the present disclosure.

## Claims

1. A method for controlling an energy storage system, comprising:
acquiring a power dispatching demand of user equipment, a user quotation for electricity consumption, and energy storage information of the energy storage system in a real time manner, wherein the energy storage information comprises a plurality of discharge prices at different price levels, and the user quotation for electricity consumption is a discharge price selected from the plurality of discharge prices by a user based on a demand urgency for electricity consumption of the user;
determining a power dispatching demand of target user equipment based on the power dispatching demands and the user quotations for electricity consumption of all the user equipment;
generating a target user dispatching instruction based on the power dispatching demand of the target user equipment and the energy storage information; and
controlling the energy storage system to supply power to the user equipment in response to the target user dispatching instruction.

2. The method for controlling an energy storage system according to claim 1, wherein the determining a power dispatching demand of target user equipment comprises:
determining a target price based on all the user quotations for electricity consumption;
determining the power dispatching demand of each user equipment corresponding to the target price;
determining an acquisition time of the power dispatching demand of the each user equipment corresponding to the target price; and
determining the power dispatching demand of the target user equipment based on an order of the acquisition time of the power dispatching demand of the each user equipment corresponding to the target price.

3. The method for controlling an energy storage system according to claim 2, wherein the determining a target price comprises:
sorting all the user quotations for electricity consumption in a descending order; and
determining the user quotations for electricity consumption sequentially as the target price based on the sorting of the user quotations for electricity consumption.

4. The method for controlling an energy storage system according to claim 2, wherein the determining a power dispatching demand of target user equipment comprises:
determining, based on the order of the acquisition time of the power dispatching demand of the each user equipment corresponding to the target price, the power dispatching demand of the each user equipment sequentially as the power dispatching demand of the target user equipment.

5. The method for controlling an energy storage system according to claim 1, wherein the generating a target user dispatching instruction comprises:
determining whether the energy storage system meets the power dispatching demand of the target user equipment based on the energy storage information;
generating the target user dispatching instruction based on the power dispatching demand of the target user equipment, in a case that the energy storage system meets the power dispatching demand of the target user equipment; and
determining a power supply capacity of the energy storage system based on the energy storage information and generating the user dispatching instruction based on the power supply capacity, in a case that the energy storage system fails to meet the power dispatching demand of the target user equipment.

6. The method for controlling an energy storage system according to claim 1, wherein
the power dispatching demand of the user equipment comprises a charge power range, a discharge power range, an electricity demand and a power generation capacity;
the energy storage information further comprises an available discharge power range, an available charge power range, an available discharge capacity, an available charge capacity and a charge price; and
the plurality of discharge prices correspond to different available discharge power ranges and different available discharge capacities of the energy storage system.

7. The method for controlling an energy storage system according to claim 1, wherein after the controlling the energy storage system to supply power to the user equipment in response to the target user dispatching instruction, the method further comprises:
updating bill information in response to the target user dispatching instruction; and
updating the energy storage information.

8. An apparatus for controlling an energy storage system, comprising:
an acquisition module, configured to acquire a power dispatching demand of user equipment, a user quotation for electricity consumption, and energy storage information of the energy storage system in a real time manner, wherein the energy storage information comprises a plurality of discharge prices at different price levels, and the user quotation for electricity consumption is a discharge price selected from the plurality of discharge prices by a user based on a demand urgency for electricity consumption of the user;
a power dispatching demand determination module of target user equipment, configured to determine a power dispatching demand of the target user equipment based on the power dispatching demands and the user quotations for electricity consumption of all the user equipment;
a generation module for a target user dispatching instruction, configured to generate a target user dispatching instruction based on the power dispatching demand of the target user equipment and the energy storage information; and
a dispatching module, configured to control the energy storage system to supply power to the user equipment in response to the target user dispatching instruction.

9. A power supply system, comprising at least one user equipment, an alternating-current power grid, at least one energy storage system and an apparatus for controlling an energy storage system, wherein
the apparatus for controlling an energy storage system is configured to perform the method for controlling an energy storage system according to any one of claims 1 to 7.

10. An electronic device, comprising:
at least one processor;
a communication interface connected to the at least one processor; and
a memory connected to the at least one processor and the communication interface, wherein the memory is configured to store a computer program executable by the at least one processor, and the computer program is executed by the at least one processor to cause the at least one processor to perform the method for controlling an energy storage system according to any one of claims 1 to 7.
